Europäisches Patentamt

European Patent Office

Office européen des brevets

(11) Publication number: **0 465 702 A1**

# EUROPEAN PATENT APPLICATION

(21) Application number: **90113231.6**

(22) Date of filing: **11.07.90**

(51) Int. Cl.⁵: **B23K 31/00**, B23P 6/00, G21C 15/22

(43) Date of publication of application:
**15.01.92 Bulletin 92/03**

(84) Designated Contracting States:
**BE CH ES FR GB IT LI**

(71) Applicant: **WESTINGHOUSE ELECTRIC CORPORATION**
**Westinghouse Building Gateway Center**
**Pittsburgh Pennsylvania 15222(US)**

(72) Inventor: **Rusnica, Edward Joseph**
**26 Deerfield Drive**
**Greensburg, Pennsylvania 15601(US)**
Inventor: **Walker, Larry Irvine**
**31 Brooklane Drive**
**Harrison City, Pennsylvania 15636(US)**
Inventor: **Colvin, Eric Roger**
**1020 Crestwood Drive**
**North Huntingdon, Pennsylvania 15642(US)**
Inventor: **Dudiak, Jan Gregor**
**301 Brandywine Drive**
**Irwin, Pennsylvania 15642(US)**
Inventor: **Ezekoye, Ike L.**
**1106 Wood Street**
**Pittsburgh, Pennsylvania 15221(US)**
Inventor: **Meuschke, Robert Edward**
**121 Shangri-La Drive**
**Monroeville, Pennsylvania 15146(US)**

(74) Representative: **Fleuchaus, Leo, Dipl.-Ing. et al**
**Patentanwälte Helmut Schroeter, Klaus Lehmann, Wulf Wehser, Rupprecht Holzer, Wolfgang Gallo Ludwigstrasse 26**
**W-8900 Augsburg(DE)**

(54) **Apparatus and method for repairing welded flow connections provided through high pressure casings of nuclear power plant pumps or like devices.**

(57) An adaptor (24) is provided for repairing a damaged welded flow connection between a pipe (16) and a casing (10) formed from material requiring post-weld heat treatment and operating as a housing for a high pressure plant equipment item. The adaptor (24) has a threaded inner end portion (27) engageable with a thread tapped into the surface about an opening bored into the casing (10) at the casing location from which the damaged welded connection has been removed.

A tandem high pressure seal (32, 34) is provided between the adaptor (24) and the casing (10). An outer end portion of the adaptor is secured to the pipe (16), and the adaptor has an opening (28) extending through the inner and outer end portions to carry flow between the casing (10) and the pipe (16).

In one embodiment, the adaptor outer end portion is seated in a socket formed in the casing about the flow opening, and a pair of sealing rings are disposed between the socket side wall and the adaptor outer end portion to form the tandem high pressure seal.

In another embodiment, pipe threading is employed for the adaptor/casing engagement. A collar is engaged with the adaptor and tightended against a seating surface on the casing about the flow opening with a sealing ring disposed between the collar and the seating surface.

FIG. 3A.

The present invention relates to engineering servicing for nuclear power plants and more particularly to the repair of welded flow connections provided through high pressure pump casings and like devices employed in nuclear power plant and other industrial applications.

Flow connections for high pressure pumps and like devices are typically provided through use of a socket molded as part of the casing or welded to the casing in an opening therethrough. A conduit or pipe for directing flow to or from the casing has its end disposed within the socket and it is welded thereto to provide a high pressure seal. In pumps and other applications, it is also necessary that the inner end of the connection be flush with or at least not extend beyond the inner casing surface so as not to interfere with device parts housed within the casing.

After extended use of the pump or other device, thermal cycling and other stresses may cause cracking to occur in the welded flow connection. Ultimately, leakage may occur and in any case safety and efficiency considerations require that the plant owner provide engineering service for the equipment defect.

Normally, the type of pumps and other like devices being considered here have casings formed from stainless steel or other metallic material that requires heat treatment for effective welding to be achieved. Thus, replacement of the defective welded connection requires either that the casing be heat treated in place or, if it is too large for field processing, that it be removed for processing at a heat treatment facility.

Each of the heat treatment alternatives is extremely costly and time consuming for the plant owner. Furthermore, heat treatment causes small structural changes in the casing that require all machined surfaces be remachined to meet tolerances relative to other parts of the device housed within the casing.

Another very costly alternative, and typically one that is unacceptable to the plant owner, is to forego a repair of the welded connection and simply replace the entire casing with a new unit. Accordingly, it has been highly desirable to devise a cost effective arrangement that enables safe, reliable and durable engineering servicing to be provided for equipment flow connections of the type considered. The present invention is directed to such an arrangement.

Apparatus is provided for repairing a damaged welded flow connection between a pipe and a casing formed from material requiring post-weld heat treatment and operating as a housing for a high pressure plant equipment item. The apparatus comprises an adaptor having a threaded inner end portion engageable with a thread tapped into the surface about an opening bored into the casing at the casing location from which the damaged welded connection has been removed.

A tandem high pressure seal is provided between the adaptor and the casing. An outer end portion of the adaptor is secured to the pipe, and the adaptor has an opening extending through the inner and outer end portions to carry flow between the casing and the pipe.

FIGURE 1 shows a vertical section of a portion of a pump casing that includes a welded flow connection having stress cracking for which engineering service is required;

FIGURE 2 shows the same pump casing section with machining operations performed in preparation for attachment of a corrective adaptor arranged and applied in accordance with the invention;

FIGURE 3A shows the pump casing section with a preferred embodiment of the adaptor assembled therewith;

FIGURE 3B shows a cross-section through the adaptor taken along the reference plane B-B of FIGURE 3A;

FIGURE 3C shows an enlarged sectional view of a sealing area of the adaptor in reference circle 3C of FIGURE 3A;

FIGURE 4 illustrates another adaptor arranged in accordance with an alternative embodiment of the invention; and

FIGURE 5 shows a variation of the embodiment of FIGURE 4.

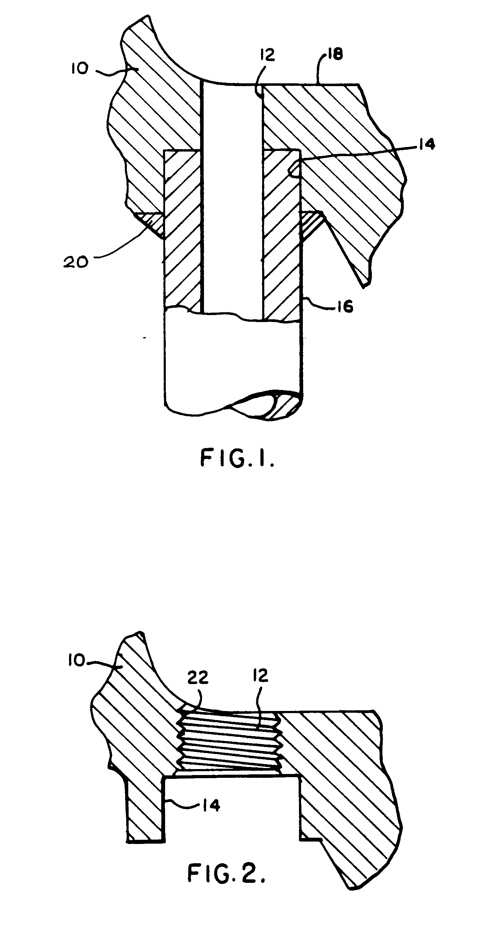

More particularly, there is shown in FIGURE 1 a portion of a casing 10 formed from a material, in this case stainless steel, that requires post-weld heat treatment to produce a reliable and durable weld. The casing 10 provides a housing for a large high pressure centrifugal pump employed in a nuclear power plant to provide emergency reactor core cooling water in the event of a loss of normal reactor core cooling.

A flow opening 12 is provided through the casing 10, and a socket 14 is machined into the outer side of the casing 10 to provide a receptacle for a pipe 16 that provides pressure balance by allowing flow to follow a pressure gradient in a bypass of the pump.

During original plant installation, the pipe 16 is assembled with the casing 10 and secured thereto by a weld 20. Required heat treatment is then applied.

After extended plant use, cracking may occur in the weld or surrounding metal, and it is then necessary that engineering service be performed to correct the defect. As previously indicated, it is preferable to avoid costly casing replacement and costly rewelding that requires post-weld heat treatment and remachining of machined casing surfaces.

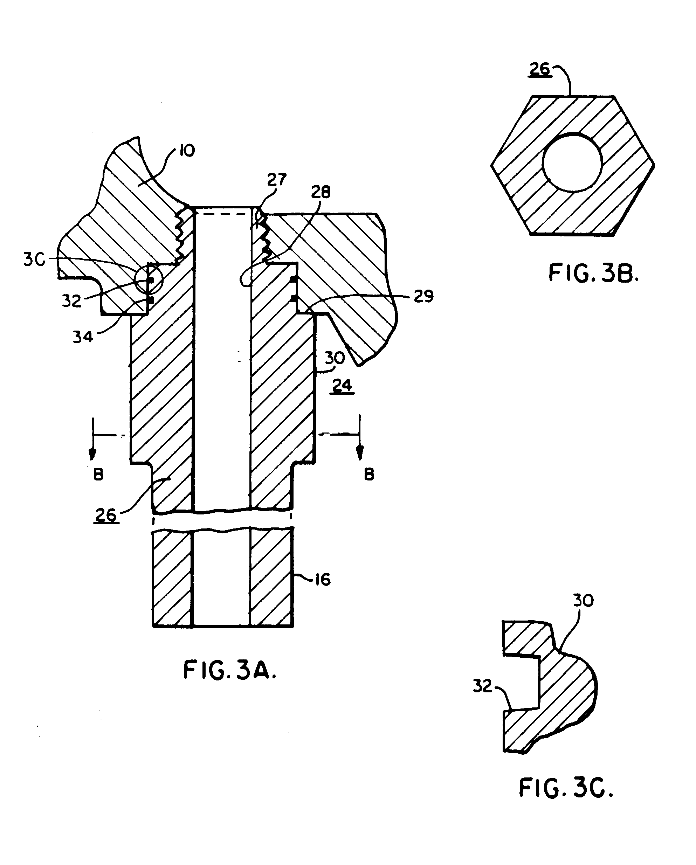

In accordance with the present invention, a mechanically installed adaptor apparatus 24 (FIGURES 3A-3C) is employed to replace the defective welded connection. It is necessary in this case and therefore generally preferable that the adaptor (1) be structured to permit flow between the pump and the pipe and (2) be free of any structure that protrudes inwardly of the inner casing surface 18 to the extent that it would otherwise interfere with moving parts located within and near the inner casing surface 18.

As indicated in FIGURE 1, the pipe is first cut away from the casing 10 and the old weld 20 and damaged metal are next machined off the casing. The pump casing 10 is then machined as indicated in FIGURE 2 to provide for reception of the adaptor.

The original casing socket 14 or bore is machined and a thread 22 is formed along the sidewall of the casing flow opening 12. A radially outwardly chamfered wall surface is extended outwardly from the thread 22 to the base of the socket 14 to provide relief from stress.

The adaptor 24 has a body 26 having a flow opening 28 therethrough for fluid passage between the casing interior and the external pipe. A threaded inner end portion 27 of the adaptor body 24 is disposed within the casing opening 12 and engaged with the casing thread 22. The adaptor end portion 27 extends inwardly approximately to the inner casing surface (in this case, slightly beyond yet within moving part clearances). After placement of the adaptor 24, the external pipe is secured thereto as by conventional welding to a standard pipe flange connection.

When the adaptor 24 is fully threaded into the casing 10, a shoulder on main adaptor body portion 30 abuts against an opposing surface machined on the casing 10. Sealing against high pressure leakage is preferably provided by a tandem seal arrangement provided in this embodiment by two like O-rings 32 and 34 disposed in respective grooves formed in the main adaptor body portion 30. FIGURE 3C shows an enlarged cross- section of the O-ring 32. As indicated in FIGURE 3B, the main adaptor body portion 26 is preferably hexagonally sided to facilitate adaptor installation through use of a wrench.

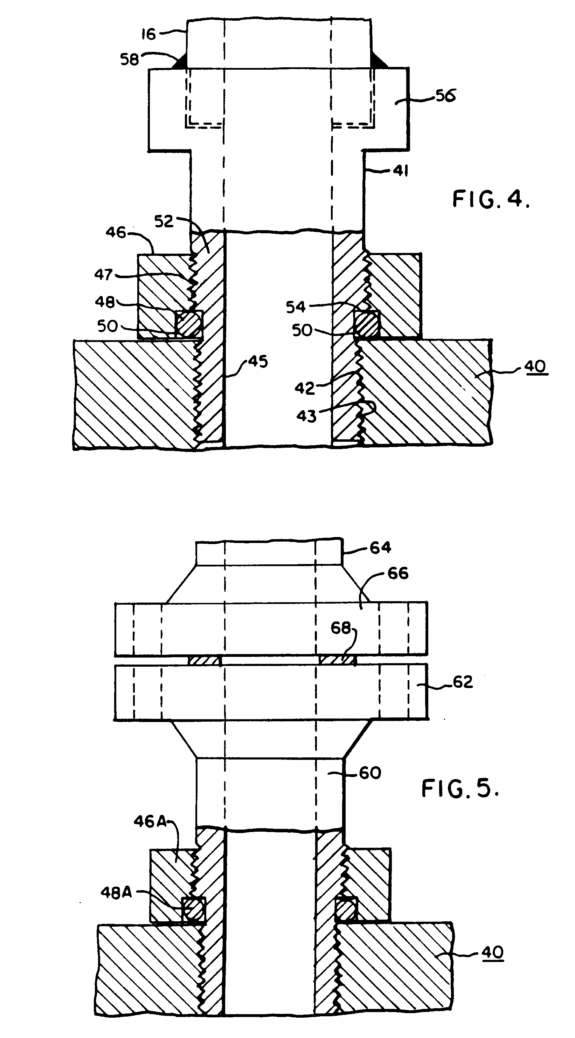

In FIGURE 4, there is shown another embodiment of the invention. A casing 40 is prepared for repair generally as described in connection with FIGURE 1. An adaptor 41, with a flow opening 45, is provided with an end portion having pipe thread 42 which in this case cooperates with casing pipe thread 43 to provide the primary high pressure seal for the casing connection. The casing opening is bored to provide a surface suitable for tapping the pipe thread 43.

A straight threaded collar 46 is engaged with adaptor thread 47 and tightened against the casing 40 to secure the adaptor 41 in place. In the repair preparation procedure, the casing 40 is spot faced to allow proper seating of the sealing ring 48.

A sealing ring 48 is disposed in a groove 50 formed between the collar 46 and a main body portion 52 of the adaptor 41 to provide a secondary seal in the tandem high pressure sealing arrangement. Preferably, a washer 54 is seated between the collar 46 and the sealing ring 48 to provide uniform ring compression.

An end flange 56 on the adaptor 41 receives the pipe 16 and is welded thereto as indicated by the reference character 58 to complete the connection repair. A variation of the embodiment of FIGURE 4 is shown in FIGURE 5. In this instance, An adaptor 60 like the adaptor 41 includes a flange 62 that is engaged against a flange 66 provided on pipe 64. The flanges 62 and 66 are tightened together by bolts (not shown) with a sealing gasket 68 located therebetween.

With use of the described invention, damaged welded connections can be repaired weld-free and thus without the need for post-weld heat treatment. Damaged connections are repaired with the casing in place. With the described adaptor structure and the tandem high pressure sealing arrangement, joint integrity equals or exceeds that of the original welded configuration.

**Claims**

1. Apparatus for replacing a damaged welded flow connection between a pipe (16) and a port of a casing (10, 40) formed from material requiring post-weld heat treatment and operating as a housing for a high pressure plant equipment item, characterized in that

   said apparatus comprises an adapter (24, 41, 60) for connection between said casing (10, 40) and said pipe (16), said adapter having a flow through-opening and a threaded end portion (27, 42) engageable with a thread (22, 43) to be tapped into a bore forming said part of the casing, and having its other end portion adapted for securing it to said pipe,

   and that said adapter includes means for providing a high pressure seal (32, 34, 46, 48, 54) between said adapter and casing.

2. Apparatus according to claim 1, characterized in that

   said seal means include seal rings located in a pair of spaced circumferential grooves (32, 34) formed in an adapter portion adjacent said threaded end portion and adapted to be located within an outwardly facing casing socket (14).

3. Apparatus according to claim 1, characterized in that the thread of said threaded end protion (42) is a pipe thread that provides a primary seal and that said seal means include a seal ring (50) disposed in a circumferential groove adjacent said thread of said threaded end portion

and a collar (46) screwed on a further external thread (47) adjacent said threaded end portion and having an inwardly facing groove (50) receiving said seal ring for compressing said seal ring against the adjacent casing surface.

4. Apparatus according to claim 3, characterized in that a washer (54) is disposed in said collar groove (50) between said collar (46) and said seal ring (48) to provide uniform seal ring compression.

5. Apparatus according to any of claims 1 to 4, characterized in that said adapter (24, 41, 60) is adapted to be welded to the pipe (16).

6. Apparatus according to any of claims 1 to 5, characterized in that said adapter has flange means (62, 66) for securing it to corresponding flange means of the pipe with gasket means provided therebetween.

7. A method for repairing a damaged welded flow connection between a pipe (16) and a casing (10, 40) of an item of high pressure nuclear power plant equipment, where the casing is formed from a material requiring post-weld treatment, wherein the pipe is detached from the casing, characterized by the steps of:

removing the damaged weld and casing metal from the outer side of the casing about a flow opening (12) through the casing to which the original flow connection had been made;

boring the flow opening to a predetermined larger size which allows to achieve an adapter fit;

tapping a thread (22, 43) alonge the side surface of the flow opening;

threading a threaded end portion (27, 42) of an adapter (24, 41) having a flow opening (28, 45) therethrough into the threaded casing opening and forming a high pressure seal between the adapter and the casing; and

securing the opposite end portion of the adapter to the pipe.

8. The method according to claim 7, characterized by the further steps of:

machining a socket space (14) into the casing (10, 40) about the flow opening (12) for reception of an adapter portion adjacent said threaded end portion; and

disposing a pair of sealing rings (32, 34) in spaced grooves machined in said adapter portion adjacent said threaded end portion to operate as tandem seals against the side surface of the casing socket.

9. The method according to claim 7, characterized by the further steps of:

machining a surface on the casing about the flow opening (12) to operate as a seat surface for a collar (46) screwed on a further threaded adapter protion adjacent said theaded end portion with a seal ring (48) received in a inwardly facing groove (50) of the collar;

said tapping of the casing flow opening being such as thread for engagement with a pipe thread provided on said threaded adapter end portion (42);

tightening said collar against the casing seat surface so that the sealing ring operates as a high pressure seal against the casing seat surface and the adapter surface.

10. The method according to claim 9, characterized by inserting a washer (54) in the collar groove (50) between the collar (46) and the sealing ring (48) to provide uniform ring compression.

FIG.1.

FIG.2.

FIG. 3A.

FIG. 3B.

FIG. 3C.

FIG. 4.

FIG. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-B-1 208 422 (COMMISSARIAT A L'ENERGIE ATOMIQUE) <br> * claims 1, 2; figure 1 * <br> – – – – – | 1 | B 23 K 31/00 <br> B 23 P 6/00 <br> G 21 C 15/22 |

|  |
|---|
| TECHNICAL FIELDS SEARCHED (Int. Cl.5) |
| B 23 K <br> B 23 P <br> F 16 L <br> G 21 C |

The present search report has been drawn up for all claims

| Place of search | Date of completion of search | Examiner |
|---|---|---|
| Berlin | 11 March 91 | WUNDERLICH J E |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

& : member of the same patent family, corresponding
    document